# EUROPEAN PATENT SPECIFICATION

(11) **EP 2 859 048 B1**
(45) Date of publication and mention of the grant of the patent: **03.07.2019**
(21) Application number: 13805088.5
(22) Date of filing: 22.05.2013
(51) Int. Cl.: C08L 83/10, C08K 5/3432, C08G 77/455, C08L 23/04, C08K 5/5415, C08K 5/5455

(54) **MELT-PROCESSABLE COMPOSITIONS HAVING SILICONE-CONTAINING POLYMERIC PROCESS ADDITIVES**
SCHMELZVERARBEITBARE ZUSAMMENSETZUNGEN MIT SILIKONHALTIGEN POLYMERPROZESSADDITIVEN
COMPOSITIONS POUVANT ÊTRE TRAITÉES PAR FUSION ET COMPRENANT DES ADDITIFS DE TRAITEMENT POLYMÈRES CONTENANT DE LA SILICONE

(30) Priority: 11.06.2012 US 201261658135 P
(43) Date of publication of application: 15.04.2015
(73) Proprietor: 3M Innovative Properties Company, St. Paul, MN 55133-3427 (US)
(72) Inventor: LAVALLEE, Claude, Saint Paul, Minnesota 55133-3427 (US); DILLON, Maria P., Saint Paul, Minnesota 55133-3427 (US)
(74) Representative: Herzog, Fiesser & Partner Patentanwälte PartG mbB
(86) International application number: PCT/US2013/042216
(87) International publication number: WO 2013/188067

(56) References cited:
- CA-A1- 2 233 976
- CN-A- 102 382 371
- US-A1- 2006 046 592
- US-A1- 2008 058 449
- US-A1- 2008 199 620
- US-A1- 2008 318 065
- US-A1- 2010 119 751
- US-A1- 2011 244 159
- US-A1- 2011 262 672

## Description

### TECHNICAL FIELD

Melt-processable compositions and articles made using melt-processable compositions.

### BACKGROUND

Siloxanes are known to be effective polymer processing additives (PPAs). Low molecular weight polydimethyl silicone (PDMS) PPAs were reported as early as 1985 (see U.S. Patent 4,535,113). Further, high molecular weight siloxane PPAs have more recently become available, for instance, from Dow Corning. The efficacy of these materials, however, is generally inferior to fluoroelastomer PPAs such as FX-9613 (available from 3M Company). Further, the tacky nature of such siloxane PPAs can make them difficult to handle and as such they are only provided as concentrates.

Siloxane block copolymers have also demonstrated efficacy as PPAs. For instance, 3M has developed a siloxane-polyamide PPA, and siloxane-polyurea block copolymers (SPU) are available from Wacker. These materials are thermoplastic and generally are more easily handled. Although effective as PPAs, they are typically less efficacious than fluoroelastomer based PPAs.

In practice, PPAs are added to melt-processable thermoplastic hydrocarbon polymers in order to improve their characteristics, for instance, in blow molding or injection molding. Such molded products often contain hindered amine light stabilizers.

US 2010/0119751 A1 relates to polyolefin compositions containing a polyolefin resin, a hindered amine light stabilizer, and polymer processing aid.

### SUMMARY

In one aspect, the present application relates to compositions comprising from 50 to 99.5 weight percent based on the total weight of the composition of a melt-processable thermoplastic hydrocarbon polymer. The compositions also comprise a thermoplastic silicone-containing polymeric process additive and a hindered amine light stabilizer. In the compositions described herein, the ratio of the silicone-containing polymeric process additive to hindered amine light stabilizer is from 0.5:1 to 1.5:1, and the thermoplastic silicone-containing polymeric process additive is selected from the group consisting of linear polydiorganosiloxane polyamide block polymers and polydiorganosiloxane urethane-containing copolymers.

The above summary of the present invention is not intended to describe each disclosed embodiment or every implementation of the present invention. The description that follows more particularly exemplifies illustrative embodiments. In several places throughout the application, guidance is provided through lists of examples, which can be used in various combinations. In each instance, the recited list serves only as a representative group and should not be interpreted as an exclusive list.

### DETAILED DESCRIPTION

In practice, PPAs are added to melt-processable thermoplastic hydrocarbon polymers in order to improve their characteristics, for instance, in blow molding or injection molding. Such molded products often contain hindered amine light stabilizers (HALS), particularly for applications where the polymeric product will be exposed to sunlight (e.g., greenhouse films, agricultural films, silage wrap, and heavy duty shipping sack applications). While not limited to polyethylene, HALS are often added to polyethylene-containing articles to prevent UV degradation of the polyethylene polymers or copolymers.

It is observed that the addition of HALS to compositions containing fluoroelastomer PPAs undergo a decrease in performance. While not wishing to be bound by theory, it is believed that this interference stems from a combination of (i) die site competition between the fluoroelastomer PPA and the HALS and (ii) acid-base reaction between the fluoroelastomer PPA and HALS, respectively, which causes a degradation of the fluoroelastomer PPA. It has also been observed that high processing temperatures and low shear rates, which may be used independently or in combination, may increase this fluoroelastomer PPA-HALS interference. The data do not, however, indicate any impact of PPA on the performance of HALS.

In the present description, it is found that instead of interfering with PPA performance, that processing can be improved (when compared to similar compositions without HALS) for compositions comprising from 50 to 99.5 weight percent based on the total weight of the composition of a melt-processable thermoplastic hydrocarbon polymer; a silicone-containing polymeric process additive; and a hindered amine light stabilizer; wherein the ratio of the silicone-containing polymeric process additive to hindered amine light stabilizer is from 0.5:1 to 1.5:1.

### Definitions

The term "aralkyl" refers to a monovalent group of formula: -R^{a}-Ar where R^{a} is an alkylene and Ar is an aryl group. That is, the aralkyl is an alkyl substituted with an aryl.

The term "alkaryl" refers to a monovalent group of the formula: -Ar-R^{a} where R^{a} is an alkylene and Ar is an aryl group. That is, the alkaryl is an aryl substituted with one or more alkyl.

The term "aralkylene" refers to a divalent group of formula: -R^{a}-Ar^{a}- where R^{a} is an alkylene and Ar^{a} is an arylene (i.e., an alkylene is bonded to an arylene).

The term "alkarylene" refers to a divalent group of formula: -Ar^{a}-R^{a}- where R^{a} is an alkylene and Ar^{a} is an arylene (i.e., an arylene is bonded to an alkylene).

The term "polydiorganosiloxane" refers to a divalent segment of formula: 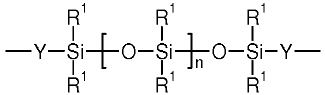 where each R¹ is independently an alkyl, haloalkyl, aralkyl, alkenyl, aryl, or aryl substituted with an alkyl, alkoxy, or halo; each Y is independently an alkylene, aralkylene, or a combination thereof; and subscript n is independently an integer of 0 to 1500.

### Hydrocarbon polymer

Hydrocarbon polymers described herein may generally be thermoplastic materials, or materials that flow when heated sufficiently above their glass transition point and become solid when cooled. They may also have elastomeric properties. The hydrocarbon polymer includes but is not limited to hot melt processable thermoplastic polymers (which may be elastomeric or nonelastomeric), such as polypropylene, polystyrene, polyethylene, and polyesters, or mixtures thereof, excluding thermoplastic silicone-containing PPA's as described herein (e.g., those of Formulas I, and II). By "hot melt processable" it is meant that the polymer will melt and flow at a temperature at which the thermoplastic silicone-based PPA's of Formulas I, and II) will melt and flow.

The hydrocarbon may be solvent or melt mixed with the thermoplastic silicone-containing PPA component(s). The hydrocarbon polymer may comprise other additives, fillers, and the like, however it is not a thermoplastic silicone-containing PPA compound of Formulas I, and II.

At use temperature the mixtures generally have at least two domains, one discontinuous and the other continuous, because of the general immiscibility of the thermoplastic silicone-containing PPA component with the hydrocarbon polymer. Of course, the mixture may contain more than one thermoplastic silicone-containing PPA component and more than one hydrocarbon polymer.

In some embodiments, the melt-processable thermoplastic hydrocarbon polymer described herein is selected from the group consisting of: a polyethylene homopolymer, a polypropylene homopolymer, a modified polyethylene polymer, a modified polypropylene polymer, a polyethylene copolymer, a polypropylene copolymer, and a combination thereof. The melt-processable thermoplastic hydrocarbon polymer may be of a high density type or low density type.

In particular, thermoplastic materials useful in the present disclosure that are generally considered nonelastomeric include, for example, polyolefins such as polypropylene, low density polyethylene, linear low density polyethylene, very low density polyethylene, medium density polyethylene, high density polyethylene, such as that available under the trade designation DOW HDPE DMDA-8904 NT7 commercially available from DOW Plastics an affiliate of the DOW Chemical Co., Michigan USA, polybutylene, nonelastomeric polyolefin copolymers or terpolymers, such as ethylene/propylene copolymer and blends thereof; ethylene-vinyl acetate copolymers such as that available under the trade designation ELVAX 260, available from DuPont Chemical Co.; ethylene acrylic acid copolymers; ethylene methacrylic acid copolymers such as that available under the trade designation SURLYN 1702, available from DuPont Chemical Co.; polymethylmethacrylate; polystyrene; ethylene vinyl alcohol; polyester; amorphous polyester; polyamides; fluorinated thermoplastics, such a polyvinylidene fluoride, fluorinated ethylene/propylene copolymers and fluorinated ethylene/propylene copolymers; halogenated thermoplastics, such as a chlorinated polyethylene and polyvinyl chloride (PVC). Any single hydrocarbon material can be mixed with at least one silicone-based PPA-containing component. Alternatively, a mixture of hydrocarbon polymer may be used.

The hydrocarbon polymer may be present in the compositions described herein in a major amount. That is, the hydrocarbon polymer may be present in an amount of from 50 to 99.5 percent by weight based on the total weight of the composition. More specifically, the hydrocarbon polymer may be present in a weight percent of from 99.9 wt% to 95 wt% based on the total weight of the composition.

### Silicone-Containing Polymeric Process Additive

Various silicone-containing PPAs are useful in the compositions presently disclosed. Such silicone-containing PPAs are thermoplastic. Silicone-containing PPAs are selected from linear polydiorganosiloxane polyamide block polymers, and polydiorganosiloxane urethane-containing copolymers.

Thermoplastic silicone-containing polymer process additive components useful in the present disclosure may have a molecular weight greater than 25,000 g/mol, greater than 50,000 g/mol, and even greater than 100,000 g/mol. These silicone-containing PPA's include linear, polydiorganosiloxane polyamide block copolymers, polydiorganosiloxane urethane-containing copolymers, and the like. Silicone-containing PPA's presently disclosed are substantially free of fluoropolymers, siloxanes and any other process additives that are not "hot melt processable" per se (by not "hot melt processable" in this context, it is meant that such materials are fluidic polymers with very low glass transition (Tg) values, and flow at room temperature and above without the need for elevated temperatures).

A linear, polydiorganosiloxane polyamide block copolymer useful in compositions of the present disclosure contains at least two repeat units of Formula I:

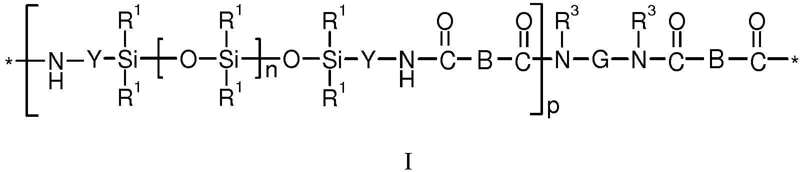

In this formula (I), each R¹ is independently an alkyl, haloalkyl, aralkyl, alkenyl, aryl, or aryl substituted with an alkyl, alkoxy, or halo. Each Y is independently an alkylene, aralkylene, or a combination thereof. Subscript n is independently an integer of 0 to 1500 and subscript p is an integer of 1 to 10. Each group B is independently a covalent bond, an alkylene of 4-20 carbons, an aralkylene, an arylene, or a combination thereof. When each group B is a covalent bond, the polydiorganosiloxane polyamide block copolymer of Formula I is referred to as a polydiorganosiloxane polyoxamide block copolymer.

Group G is a divalent group that is the residue unit that is equal to a diamine of formula R³HN-G-NHR³ minus the two -NHR³ groups. Group R³ is hydrogen or alkyl (e.g., an alkyl having 1 to 10, 1 to 6, or 1 to 4 carbon atoms) or R³ taken together with G and with the nitrogen to which they are both attached forms a heterocyclic group (e.g., R³HN-G-NHR³ is piperazine or the like). Each asterisk (*) indicates a site of attachment of the repeat unit to another group in the copolymer such as, for example, another repeat unit of Formula I.

Suitable alkyl groups for R¹ in Formula I typically have 1 to 10, 1 to 6, or 1 to 4 carbon atoms. Exemplary alkyl groups include, but are not limited to, methyl, ethyl, isopropyl, n-propyl, n-butyl, and iso-butyl. Suitable haloalkyl groups for R¹ often have only a portion of the hydrogen atoms of the corresponding alkyl group replaced with a halogen. Exemplary haloalkyl groups include chloroalkyl and fluoroalkyl groups with 1 to 3 halo atoms and 3 to 10 carbon atoms. Suitable alkenyl groups for R¹ often have 2 to 10 carbon atoms. Exemplary alkenyl groups often have 2 to 8, 2 to 6, or 2 to 4 carbon atoms such as ethenyl, n-propenyl, and n-butenyl. Suitable aryl groups for R¹ often have 6 to 12 carbon atoms. Phenyl is an exemplary aryl group. The aryl group can be unsubstituted or substituted with an alkyl (i.e., it may be an alkaryl group) (the alkyl group may be, e.g., an alkyl having 1 to 10 carbon atoms, 1 to 6 carbon atoms, or 1 to 4 carbon atoms), an alkoxy (e.g., an alkoxy having 1 to 10 carbon atoms, 1 to 6 carbon atoms, or 1 to 4 carbon atoms), or halo (e.g., chloro, bromo, or fluoro). Suitable aralkyl groups for R¹ usually have an alkylene group with 1 to 10 carbon atoms and an aryl group with 6 to 12 carbon atoms. In some exemplary aralkyl groups, the aryl group is phenyl and the alkylene group has 1 to 10 carbon atoms, 1 to 6 carbon atoms, or 1 to 4 carbon atoms (i.e., the structure of the aralkyl is alkylene-phenyl where an alkylene is bonded to a phenyl group).

In some embodiments, in some repeat units of Formula I, at least 40 percent, or even at least 50 percent, of the R¹ groups are phenyl, methyl, or combinations thereof. For example, at least 60 percent, at least 70 percent, at least 80 percent, at least 90 percent, at least 95 percent, at least 98 percent, or at least 99 percent of the R¹ groups can be phenyl, methyl, or combinations thereof. In some embodiments, in some repeat units of Formula I, at least 40 percent, and or even at least 50 percent, of the R¹ groups are methyl. For example, at least 60 percent, at least 70 percent, at least 80 percent, at least 90 percent, at least 95 percent, at least 98 percent, or at least 99 percent of the R¹ groups can be methyl. The remaining R¹ groups can be selected from an alkyl having at least two carbon atoms, haloalkyl, aralkyl, alkenyl, aryl, or aryl substituted with an alkyl, alkoxy, or halo.

Each Y in Formula I is independently an alkylene, aralkylene, alkarylene or a combination thereof. Suitable alkylene groups typically have up to 10 carbon atoms, up to 8 carbon atoms, up to 6 carbon atoms, or up to 4 carbon atoms. Exemplary alkylene groups include methylene, ethylene, propylene, butylene, and the like. Suitable aralkylene groups usually have an arylene group with 6 to 12 carbon atoms bonded to an alkylene group with 1 to 10 carbon atoms. In some exemplary aralkylene groups, the arylene portion is phenylene. That is, the divalent aralkylene group is phenylene-alkylene where the phenylene is bonded to an alkylene having 1 to 10, 1 to 8, 1 to 6, or 1 to 4 carbon atoms. As used herein with reference to group Y, "a combination thereof' refers to a combination of two or more groups selected from an alkylene and aralkylene group. A combination can be, for example, a single aralkylene bonded to a single alkylene (e.g., alkylene-arylene-alkylene). In one exemplary alkylene-arylene-alkylene combination, the arylene is phenylene and each alkylene has 1 to 10, 1 to 6, or 1 to 4 carbon atoms.

Each subscript n in Formula I is independently an integer of 0 to 1500. For example, subscript n can be an integer up to 1000, up to 500, up to 400, up to 300, up to 200, up to 100, up to 80, up to 60, up to 40, up to 20, or up to 10. The value of n is often at least 1, at least 2, at least 3, at least 5, at least 10, at least 20, or at least 40. For example, subscript n can be in the range of 40 to 1500, 0 to 1000, 40 to 1000, 0 to 500, 1 to 500, 40 to 500, 1 to 400, 1 to 300, 1 to 200, 1 to 100, 1 to 80, 1 to 40, or 1 to 20.

The subscript p is an integer of 1 to 10. For example, the value of p is often an integer up to 9, up to 8, up to 7, up to 6, up to 5, up to 4, up to 3, or up to 2. The value of p can be in the range of 1 to 8, 1 to 6, or 1 to 4.

Group G in Formula I is a residual unit that is equal to a diamine compound of formula R³HN-G-NHR³ minus the two amino groups (i.e., -NHR³ groups). The diamine can have primary or secondary amino groups. Group R³ is hydrogen or alkyl (e.g., an alkyl having 1 to 10, 1 to 6, or 1 to 4 carbon atoms) or R³ taken together with G and with the nitrogen to which they are both attached forms a heterocyclic group (e.g., R³HN-G-NHR³ is piperazine). In most embodiments, R³ is hydrogen or an alkyl. In many embodiments, both of the amino groups of the diamine are primary amino groups (i.e., both R³ groups are hydrogen) and the diamine is of formula H₂N-G-NH₂.

In some embodiments, G is an alkylene, heteroalkylene, polydiorganosiloxane, arylene, aralkylene, alkarylene, or a combination thereof. Suitable alkylenes often have 2 to 10, 2 to 6, or 2 to 4 carbon atoms. Exemplary alkylene groups include ethylene, propylene, butylene, and the like. Suitable heteroalkylenes are often polyoxyalkylenes such as polyoxyethylene having at least 2 ethylene units, polyoxypropylene having at least 2 propylene units, or copolymers thereof. Exemplary polydiorganosiloxanes include, but are not limited to, polydimethylsiloxanes with alkylene Y groups. Suitable aralkylene groups usually contain an arylene group having 6 to 12 carbon atoms bonded to an alkylene group having 1 to 10 carbon atoms. Some exemplary aralkylene groups are phenylene-alkylene where the phenylene is bonded to an alkylene having 1 to 10 carbon atoms, 1 to 8 carbon atoms, 1 to 6 carbon atoms, or 1 to 4 carbon atoms. Some exemplary alkarylene groups are alkylene-phenylene where the alkylene having 1 to 10 carbon atoms, 1 to 8 carbon atoms, 1 to 6 carbon atoms, or 1 to 4 carbon atoms is bonded to an phenylene. As used herein with reference to group G, "a combination thereof' refers to a combination of two or more groups selected from an alkylene, heteroalkylene, polydiorganosiloxane, arylene, aralkylene, and alkarylene. A combination can be, for example, an aralkylene bonded to an alkylene (e.g., alkylene-arylene-alkylene). In one exemplary alkylene-arylene-alkylene combination, the arylene is phenylene and each alkylene has 1 to 10, 1 to 6, or 1 to 4 carbon atoms.

In some embodiments, the polydiorganosiloxane polyamide is a polydiorganosiloxane polyoxamide. The polydiorganosiloxane polyoxamide tends to be free of groups having a formula -R^{a}-(CO)-NH- where R^{a} is an alkylene. All of the carbonylamino groups along the backbone of the copolymeric material are part of an oxalylamino group (i.e., the -(CO)-(CO)-NH- group). That is, any carbonyl group along the backbone of the copolymeric material is bonded to another carbonyl group and is part of an oxalyl group. More specifically, the polydiorganosiloxane polyoxamide has a plurality of aminoxalylamino groups.

The polydiorganosiloxane polyamide is a block copolymer and can be an elastomeric material. Unlike many of the known polydiorganosiloxane polyamides that are generally formulated as brittle solids or hard plastics, the polydiorganosiloxane polyamides can be formulated to include greater than 50 weight percent polydiorganosiloxane segments based on the weight of the copolymer. The weight percent of the diorganosiloxane in the polydiorganosiloxane polyamides can be increased by using higher molecular weight polydiorganosiloxanes segments to provide greater than 60 weight percent, greater than 70 weight percent, greater than 80 weight percent, greater than 90 weight percent, greater than 95 weight percent, or greater than 98 weight percent of the polydiorganosiloxane segments in the polydiorganosiloxane polyamides. Higher amounts of the polydiorganosiloxane can be used to prepare elastomeric materials with lower modulus while maintaining reasonable strength.

Some of the polydiorganosiloxane polyamides can be heated to a temperature up to 200°C, up to 225°C, up to 250°C, up to 275°C, or up to 300°C without noticeable degradation of the material. For example, when heated in a thermogravimetric analyzer in the presence of air, the copolymers often have less than a 10 percent weight loss when scanned at a rate 50°C per minute in the range of 20°C to 350°C. Additionally, the copolymers can often be heated at a temperature such as 250°C for 1 hour in air without apparent degradation as determined by no detectable loss of mechanical strength upon cooling.

Certain embodiments of the copolymeric material of Formula I can be optically clear. As used herein, the term "optically clear" refers to a material that is clear to the human eye. An optically clear copolymeric material often has a luminous transmission of at least 90 percent, a haze of less than 2 percent, and opacity of less than about 1 percent in the 400 to 700 nm wavelength range. Both the luminous transmission and the haze can be determined using, for example, the method of ASTM-D 1003-95.

Additionally, certain embodiments of the copolymeric material of Formula I can have a low refractive index. As used herein, the term "refractive index" refers to the absolute refractive index of a material (e.g., copolymeric material) and is the ratio of the speed of electromagnetic radiation in free space to the speed of the electromagnetic radiation in the material of interest. The electromagnetic radiation is white light. The index of refraction is measured using an Abbe refractometer, available commercially, for example, from Fisher Instruments of Pittsburgh, PA. The measurement of the refractive index can depend, to some extent, on the particular refractometer used. The copolymeric material usually has a refractive index in the range of 1.41 to 1.60.

The polydiorganosiloxane polyamides are soluble in many common organic solvents such as, for example, toluene, tetrahydrofuran, dichloromethane, aliphatic hydrocarbons (e.g., alkanes such as hexane), or mixtures thereof.

Silicone-polyurethane copolymers (SPU) are not particularly limited, and include, for instance, block copolymers comprising silicone blocks and diamide blocks. At points herein the term silicone-polyurea may be used interchangeably with silicone-polyurethane.

Diamide blocks may have two amide functional groups (-NHCO-) attached to a divalent organic radical (such as alkyl groups, cycloalkyl groups, and aryl groups, containing from 1 to 30 carbon atoms). Non-limiting examples of diisocyanate compounds from which diamide groups may be derived are ethylene diisocyanate, 1,6-hexylene diisocyanate, 1,12-dodecylene diisocyanate, 4,4'-diphenylmethane diisocyanate, 3,3'-dimethoxy-4,4'-diphenylmethane diisocyanate, 3,3'-dimethyl-4,4'-diphenylmethane diisocyanate, 4,4'-diphenyl diisocyanate, toluene-2,6,-diisocyanate, mixtures of toluene-2,6-diisocyanate and toluene-2,4-diisocyanate, 1,4-cyclohexylene diisocyanate, 4,4'-dicyclohexylmethane diisocyanate, 3,3'-diphenyl-4,4'-biphenylene diisocyanate, 4,4'-biphenylene diisocyanate, 2,4-diisocyanatodiphenylether, 2,4-dimethyl-1,3-phenylene diisocyanate, 4,4'-diphenylether diisocyanate, isophorone diisocyanate, and the like, and mixtures of any of the foregoing.

Silicone blocks include those having the general formula (Si(R²)₂O-) wherein R² is an organic group selected from the group consisting of substituted and unsubstituted alkyl groups, cycloalkyl groups, and aryl groups, each R² group being the same or different as the other connected to a given Si atom and having from 1 to 18 carbon atoms. Non-limiting examples include dimethylsilicones, diethylsilicones, and diphenylsilicones.

Polydiorganosiloxane urethane-containing copolymers (a subset of the class of SPU materials) useful in compositions of the present disclosure contain soft polydiorganosiloxane units, hard polyisocyanate residue units, terminal groups and optionally soft and/or hard organic polyamine residue units. Some polydiorganosiloxane urea-containing copolymers are commercially available under the trade designation "Geniomer 140" available from Wacker Chemie AG, Germany. The polyisocyanate residue is the polyisocyanate minus the -NCO groups, the organic polyamine residue is the organic polyamine minus the -NH groups, and the polyisocyanate residue is connected to the polydiorganosiloxane units or organic polyamine residues by urea linkages. The terminal groups may be non-functional groups or functional groups depending on the purpose of the polydiorganosiloxane urea segmented copolymer.

The polydiorganosiloxane urethane containing copolymers useful in presently disclosed compositions contains at least two repeat units of Formula II 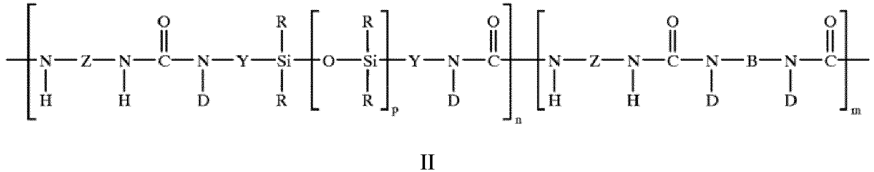 In this Formula II each R is a moiety that independently is an alkyl moiety, in some embodiments having about 1 to 12 carbon atoms and may be substituted with, for example, trifluoroalkyl or vinyl groups, a vinyl radical or higher alkenyl radical, in some embodiments represented by the formula -R² (CH₂)ₐCH-CH₂ wherein R² is -(CH₂)_{b}- or -(CH₂)_{c}CH-CH- and a is 1, 2 or 3; b is 0, 3 or 6; and c is 3, 4 or 5, a cycloalkyl moiety having about 6 to 12 carbon atoms and may be substituted with alkyl, fluoroalkyl, and vinyl groups, or an aryl moiety, in some embodiments having about 6 to 20 carbon atoms and may be substituted with, for example, alkyl, cycloalkyl, fluoroalkyl and vinyl groups or R is a perfluoroalkyl group as described in U.S. Pat. No. 5,028,679, a fluorine-containing group, as described in U.S. Pat. No. 5,236,997, or a perfluoroether-containing group, as described in U.S. Pat. Nos. 4,900,474 and 5,118,775; in some embodiments at least 50% of the R moieties are methyl radicals with the balance being monovalent alkyl or substituted alkyl radicals having 1 to 12 carbon atoms, alkenylene radicals, phenyl radicals, or substituted phenyl radicals; each Z is a polyvalent radical that is an arylene radical or an aralkylene radical, having in some embodiments from about 6 to 20 carbon atoms, an alkylene or cycloalkylene radical, having in some embodiments from about 6 to 20 carbon atoms, in some embodiments, Z is 2,6-tolylene, 4,4'-methylenediphenylene, 3,3'-dimethoxy-4,4'-biphenylene, tetramethyl-m-xylylene, 4,4'-methylenedicyclohexylene, 3,5,5-trimethyl-3-methylenecyclohexylene, 1,6-hexamethylene, 1,4-cyclohexylene, 2,2,4-trimethylhexylene and mixtures thereof; each Y is a polyvalent radical that independently is an alkylene radical which in some embodiments has 1 to 10 carbon atoms, an aralkylene radical or an arylene radical preferably having 6 to 20 carbon atoms; each D is independently selected from the group consisting of hydrogen, an alkyl radical of 1 to 10 carbon atoms, phenyl, and a radical that completes a ring structure including B or Y to form a heterocycle; B is a polyvalent radical selected from the group consisting of alkylene, aralkylene, cycloalkylene, phenylene, polyalkylene oxide, including for example, polyethylene oxide, polypropylene oxide, polytetramethylene oxide, and copolymers and mixtures thereof; m is a number that is 0 to about 1000; n is a number that is equal to or greater than 1; and p is a number that is about 5 or larger, preferably about 15 to 2000, more preferably about 30 to 1500.

In the use of polyisocyanates (Z is a radical having a functionality greater than 2) and polyamines (B is a radical having a functionality greater than 2), the structure of Formula I will be modified to reflect branching at the polymer backbone. In the use of endcapping agents, the structure of Formula II will be modified to reflect termination of the polydiorganosiloxane urea chain.

The silicone-containing process additives described herein may be present in the described compositions in a weight percent of from 0.01 wt% to 5.0 wt%, based on the total weight of the composition. More particularly, the silicone-containing process additive may be present in a weight percent of from 0.01 wt% to 0.5 wt% based on the total weight of the composition.

### Methods of Making Polydiorganosiloxane Polyamide Copolymers

The linear block copolymers having repeat units of Formula I can be prepared, for example, as discussed in WO 2010/077480. Further, polydiorganosiloxane urea containing copolymers may be prepared, also as discussed in WO 2010/077480.

### Hindered Amine Light Stabilizers

In a general sense, hindered amine light stabilizers are chemical compounds containing a functional group surrounded by a crowded steric environment. Generally, hindered amine light stabilizers are molecules that generally do not absorb UV radiation, but act to inhibit degradation of a polymer to which they are added. Generally, they act to slow down the photochemically initiated degradation reactions of the polymer, in some regards similar to the mechanism by which antioxidants function.

In some embodiments, the HALS described herein may be present in the compositions described herein in an amount of from 0.01 wt% to 3 wt%, based on the total weight of the composition. More specifically, the HALS described herein may be present in the compositions described herein in an amount of from 0.01 wt% to 1 wt%, based on the total weight of the composition.

In some embodiments, the compositions described herein comprise silicone-containing process additive and hindered amine light stabilizers in an ratio of from 0.1:1 to 2.5:1. In further embodiments, the ratio is from 0.15:1 to 2:1; or even from 0.2:1 to 1.5:1. The particular ratio will be selected based on the principles described herein, such as improvement of the processing of described compositions, the stabilization of the hydrocarbon polymer, and the like.

In one embodiment, the hindered amine light stabilizers useful in the compositions of the present description are not particularly limited. In some embodiments, the hindered amine light stabilizers are selected from compounds having the general formula: 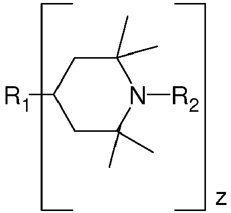 wherein R2 is selected from the group consisting of H and a C1 to C6 alkyl group, z is an integer of from 1 to 5, and R1 is an organic moiety having a valency of z. More particularly, R1 may be a C1 to C20 alkyl group, a C1 to C20 alkylene group (when z is greater than 1), a C6 to C20 aryl group, a C6 to C20 arylene group (when z is greater than 1) a C7 to C30 alkaryl group, a C7 to C30 alkarylene group (when z is greater than 1), a C7 to C30 alkaryl group, or a C7 to C30 alkarylene group (when z is greater than 1). Any of these R1 groups may be interrupted by one or more oxygen atom (e.g., in the form of an ether linkage), may contain one or more carbonyl groups (e.g., in the form of an ester, amide, ketone, etc.) and/or may contain one or more halogen atom.

Specific examples of HALS include tertiary hindered amines, and aromatic amines. Tertiary amines include those available under the tradenames Tinuvin 622 (from BASF Corporation). Aromatic amines include Chimasorb 944 (available from BASF Corporation). Other tertiary amines include, DABCO (1,2-diazo[2,2,2]bicyclooctane, from Lancaster Synthesis, Inc), 4-(dimethyl amino)benzaldehyde (available from Alfa Aesar), 2-ethylimidazole (available from Alfa Aesar), and 4-cyanopyridine (Aromatic, available from TCI America).

### Synergist

In the present description, suitable synergists (sometimes also referred to in the field as "interfacial agents"), may be included into either a masterbatch or into extrudable compositions. By interfacial agent is meant a thermoplastic polymer which is characterized by (1) being in the liquid state (or molten) at the extrusion temperature; (2) having a lower melt viscosity than both the hydrocarbon polymer and the process additive; and (3) freely wets the surface of the process additive particles in the compositions.

Examples of such synergists include, but are not limited to i) a silicone-polyether copolymer; ii) an aliphatic polyester such as poly(butylene adipate), poly(lactic acid) and polycaprolactone polyesters (in some embodiments, the polyester is not a block copolymer of a dicarboxylic acid with a poly(oxyalkylene) polymer); iii) aromatic polyesters such as phthalic acid diisobutyl ester; iv) polyether polyols such as poly(tetramethylene ether glycol); v) amine oxides such as octyidimethyl amine oxide; vi) carboxylic acids such as hydroxy-butanedioic acid; vii) fatty acid esters such as sorbitan monolaurate and triglycerides; and vii) poly(oxyalkylene) polymers. As used herein, the term "poly(oxyalkylene) polymers" refers to those polymers and their derivatives that are described in U.S. Patent 4,855,360. Such polymers include polyethylene glycols and their derivatives.

One embodiment of aliphatic polyester synergist is a polycaprolactone having a number average molecular weight in the range of 1000 to 32000, or more specifically from 2000 to 4000.

The synergist is a relatively low molecular weight ingredient which, for a particular system of process additive and hydrocarbon polymer, may improve the efficacy of the process additive. The synergist may be introduced at any point up to and including the final melt shaping process. In some instances, the process additive and synergist may be combined in a masterbatching step where both ingredients are present at high concentration (i.e., at greater than or equal to 1 wt. %, based on the total weight of the masterbatch).

### Other Additives

Functional components, tackifiers, plasticizers, and other property modifiers may be incorporated in the hydrocarbon polymer, the process additive, or both of the components of the presently disclosed compositions. Optional additives generally are not hot melt processable. That is, they do not melt and flow at the temperatures at which the hydrocarbon polymer and the process additive component melt and flow.

Functional components include, for example, antistatic additives, ultraviolet light absorbers (UVAs), dyes, colorants, pigments, antioxidants, slip agents, low adhesion materials, conductive materials, abrasion resistant materials, optical elements, dimensional stabilizers, adhesives, tackifiers, flame retardants, phosphorescent materials, fluorescent materials, nanoparticles, anti-graffiti agents, dew-resistant agents, load bearing agents, silicate resins, fumed silica, glass beads, glass bubbles, glass fibers, mineral fibers, clay particles, organic fibers, e.g., nylon, KEVLAR, metal particles, and the like.

Such optional additives can be added in amounts up to 100 parts per 100 parts of the sum of the hydrocarbon polymer and the process additive, provided that if and when incorporated, such additives are not detrimental to the function and functionality of the final composition and/or articles derived therefrom. Other additives such as light diffusing materials, light absorptive materials and optical brighteners, flame retardants, stabilizers, antioxidants, compatibilizers, antimicrobial agents such as zinc oxide, electrical conductors, thermal conductors such as aluminum oxide, boron nitride, aluminum nitride, and nickel particles, including organic and/or inorganic particles, or any number or combination thereof, can be blended into these systems.

The functional components discussed herein may also be incorporated into the process additive provided such incorporation does not adversely affect any of the resulting product to an undesirable extent.

### Processes of Making Compositions and Constructions

The presently disclosed compositions and constructions can be made by solvent-based processes known to the art, by a solventless process, or by a combination of the two.

One skilled in the art can expect the optimum mixture to be a function of the architecture and ratios of the process additive, the architecture and ratios of the hydrocarbon polymer, and whether any functional components, additives, or property modifiers are added.

Such processes, variations, and considerations are discussed, for example, in WO 2010/077480.

Various articles can be made using the disclosed compositions. These articles can be made by various methods, including, melt mixing the hydrocarbon polymer and the process additive to form a composition, and molding the composition (e.g., by blow molding, injection molding, and the like). Melt mixing can done by batch blending or extrusion.

These articles include blow molded films, injection molded tubes, bottles tube fittings, and the like. Articles made using the disclosed compositions have a weight percent of the processing additive ranging from 0.01 wt% to 10 wt% based on the total weight of the article.

### Embodiments

The articles and compositions described in the present application are further represented by the following listing of embodiments.
Embodiment 1. A composition comprising:
   from 50 to 99.5 weight percent based on the total weight of the composition of a melt-processable thermoplastic hydrocarbon polymer;
   a thermoplastic silicone-containing polymeric process additive; and
   a hindered amine light stabilizer;
   wherein the ratio of the silicone-containing polymeric process additive to hindered amine light stabilizer is from 0.1:1 to 2.5:1; and
   wherein the thermoplastic silicone-containing polymeric process additive is selected from the group consisting of linear polydioranosiloxane polyamide block polymers and polydiorganosiloxane urethane-containing copolymers.
Embodiment 2. The composition of embodiment 1 wherein the hydrocarbon polymer is selected from the group consisting of: a polyethylene homopolymer, a polypropylene homopolymer, a modified polyethylene polymer, a modified polypropylene polymer, a polyethylene copolymer, a polypropylene copolymer, and a combination thereof.
Embodiment 3. The composition of embodiment 1 or 2, wherein the hydrocarbon polymer is selected from the group consisting of a high density polymer and a low density polymer.
Embodiment 4. The composition of any of the preceding embodiments, wherein the hydrocarbon polymer is a linear low density polyethylene.
Embodiment 5. The composition of any of the preceding embodiments, wherein the silicone-containing polymeric process additive is a silicone-polyurethane.
Embodiment 6. The composition of any of embodiments 1 to 4, wherein the silicone-containing process additive is a silicone-polyamide selected from the group consisting of:
   a copolymer comprising at least two repeat units of Formula I: 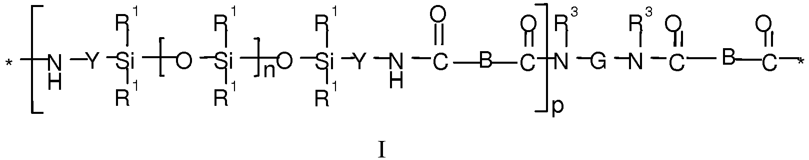
   wherein each R¹ is independently selected from the group consisting of: an alkyl group, a haloalkyl group, an aralkyl group, an alkenyl group, an aryl group, an alkoxy group, and a halogen;
   each Y is independently selected from the group consisting of: an alkylene group, aralkylene group, and a combination thereof;
   G is a divalent group;
   each B is independently selected from the group consisting of: a covalent bond, an alkylene group having from 4 to 20 carbons atoms, an aralkylene group, an arylene group, and a combination thereof; n is an integer of 0 to 1500; and p is an integer of 1 to 10; and
   each R³ is independently selected from the group consisting of: an alkyl group, a haloalkyl group, an aralkyl group, an alkenyl group, an aryl group, an alkoxy group, and an alkylene group having 2 or more carbon atoms forming a heterocyclic ring that includes the R³ groups, the nitrogen atoms, and G.
Embodiment 7. The composition of any of the preceding embodiments, wherein the silicone-containing process additive is present in a weight percent of from 0.01 wt% to 5.0 wt% based on the total weight of the composition.
Embodiment 8. The composition of embodiment 7, wherein the silicone-containing process additive is present in a weight percent of from 0.01 wt% to 0.5 % wt% based on the total weight of the composition.
Embodiment 9. The composition of any of the preceding embodiments, wherein the hindered amine light stabilizer is selected from compounds having the general formula: 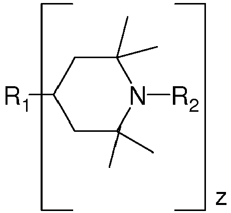 wherein R2 is selected from the group consisting of H and a C1 to C6 alkyl group, z is an integer of from 1 to 5, and R1 is an organic moiety having a valency of z.
Embodiment 10. The composition of embodiment 9, wherein R1 is selected from the group consisting of: a C1 to C20 alkyl group; a C1 to C20 alkylene group (when z is greater than 1); a C6 to C20 aryl group; a C6 to C20 arylene group (when z is greater than 1); a C7 to C30 alkaryl group; a C7 to C30 alkarylene group (when z is greater than 1); a C7 to C30 alkaryl group; or a C7 to C30 alkarylene group (when z is greater than 1);
   further wherein R1 may have one or more of the following characteristics: (a) be interrupted by one or more oxygen atom in the form of an ether linkage; (b) contain one or more carbonyl group in the form of an ester, amide, or ketone; (c) may contain one or more halogen atom.
Embodiment 11. The composition of any of the preceding embodiments, wherein the hindered amine light stabilizer is present in a weight percent of from 0.01 wt% to 3 wt% based on the total weight of the composition.
Embodiment 12. The composition of embodiment 11, wherein the hindered amine light stabilizer is present in a weight percent of from 0.01 wt% to 1 wt% based on the total weight of the composition.
Embodiment 13. The composition of any of the preceding embodiments, wherein the hydrocarbon polymer is present in a weight percent of from 99.9 wt% to 95 wt% based on the total weight of the composition.
Embodiment 14. The composition of any of the preceding embodiments, further comprising a synergist.
Embodiment 15. The composition of embodiment 13, wherein the synergist is selected from the group consisting of i) a silicone-polyether copolymer; ii) an aliphatic polyester; iii) an aromatic polyester; iv) a polyether polyol; v) an amine oxide; vi) a carboxylic acid; vii) a fatty acid ester; and vii) a poly(oxyalkylene) polymer.
Embodiment 16. The composition of embodiment 13, wherein the synergist is polyethyleneglycol.
Embodiment 17. The composition of embodiment 16, wherein the synergist is present in an amount of from 10 wt% to 75 wt% based on the total weight of the synergist and the process additive.
Embodiment 18. The composition of any of the preceding embodiments, wherein the ratio of the silicone-containing polymeric process additive to hindered amine light stabilizer is from 0.15:1 to 2:1.
Embodiment 19. The composition of any of the preceding embodiments, wherein the ratio of the silicone-containing polymeric process additive to hindered amine light stabilizer is from 0.2:1 to 1.5:1.

### EXAMPLES

The following examples are merely for illustrative purposes and are not meant to limit in any way the scope of the appended claims. All parts, percentages, ratios, and the like in the examples are by weight, unless noted otherwise.

### EXAMPLES:

### Materials

| **Acronym** | **Description** |
|---|---|
| PA-1 | A 33 Mooney viscosity fluoroelastomer commercially available under the trade designation "FX-9613" from Dyneon LLC, Oakdale, MN. |
| PA-2 | A silicone polyoxamide polymer with a 25,000 MW siloxane block preparable according to the method described in US2008 0318065 (Sherman et al.). |
| T-1 | A linear low density polyethylene (LLDPE) commercially available from Exxon Mobil under the trade designation "EM 1002.09" |
| T-2 | A LLDPE commercially available from Chevron Philips Chemicals under the trade designation "MARFLEX 7109" |
| Zinc Stearate | A zinc stearate commercially available from Alfa Aesar, Ward Hill MA, under the stock # 33238 |
| Erucamide | Added to the test resin in the form of a 5% additive concentrate (# 10090) available from AmpacetCorporation, Tarrytown, NY |
| PEG | A polyethyleneglycol (PEG) commercially available from Dow Chemical, Midland, MI under the trade designation "PEG 8000" |
| HALS | A hindered amine light stabilizer (HALS) commercially available under the trade designation "CHIMASSORB 944" from BASF Corporation, Florham Park, NJ. It was added to the test resin in the form of a 10% Masterbatch (#100104) available from Ampacet Corporation, Tarrytown, NY. |
| ANTIOXIDANT | A synergistic blend of antioxidants commercially available as "IRGANOX B 900" from Ciba Specialty Additives, Basel, Switzerland |

### Melt fracture Elimination

Melt fracture elimination example were prepared using the T-2 host resin. Trials were conducted using a Kiefel blown film line (commercially available from Kiefel, Hampton, NH) with a 40 mm, 24/1, grooved feed extruder. The die was of spiral design with a 40-mm diameter and 0.6-mm die gap (25 mil).

Prior to each evaluation it was necessary to ensure that the blown film line was free of residual fluoropolymer from the previous evaluation. This was accomplished by extruding approximately 9 kg of purge resin, "POLYBATCH KC- 15" (commercially available from A. Schulman, Akron, Ohio). The base resin was then extruded into film, under the original conditions for a minimum of one hour, until the previously determined extrusion pressure was achieved and the resultant film was fully melt- fractured.

Samples for extrusion were prepared by weighing the required amount of fluoropolymer additive concentrate, pelleted resin and other additive concentrates into a 5 gallon pail and mixing on a pail tumbler for a minimum of 10 min. The fluoropolymer additive concentrates used in the following examples were produced as described above using the Haake twin screw extruder.

The percent melt fracture was determined by taking a section of the film lay flat, opening it along the edge, measuring the individual bands (regions) of melt fracture in the transverse direction of the film, summing their total, and then dividing by the total width of the opened lay flat film.

For each sample tested, once the baseline for the host resin was established, the resin containing PPA (blend resin, host resin and additive concentrates) was charged to the extruder and the time was recorded. At 10 minutes intervals a film sample was taken and inspected visually in terms of melt fracture elimination (% MF).

### Master Batch Preparation

Polymer process additive (PPA) and synergist master batches (MB) were prepared using a laboratory scale, intermeshing, counter rotating, unvented, air cooled, conical twin screw (commercially available from HaakeBuchler under the trade designation "RHEOMIX TW-100") with a front inside diameter of 20 mm. The blend was gravity fed to the throat of the extruder, exposed to air at a rate of 38 g/min. The specific temperature profile of the 3 zone (feed, metering, mixing), plus die extruder was 170/190/200/200°C respectively. The extruder was run at 150 RPM for the first "compounding" pass. The 2nd pass was run at the same temperature profile but at 90 RPM while flood feeding the material. A 4 minute "purge" of material was discarded at the beginning each pass.

2 or 3 kg batches were prepared by shaking vigorously in a bag the given amount of granular T-1 resin, 1000 ppm of ANTIOXIDANT and 700 ppm of zinc stearate. The additives to evaluate were prepared as separate MB's at a level of 3%.

A 10% MB of HALS (Ampacet MB #100104) was used for the interaction testing.

### Melt Fracture Elimination Test Conditions

A set of examples was prepared by testing in the T-2 host resin at 220°C (430°F), 0.6 mm (25 mil) gap, 14 L/D, 6.8 kg/h (15 lb/h), 300/s. The performance of the additive was tested with and without the presence of 2000 ppm of HALS. The initial levels of PPA's used are indicated in Table 1 and the levels increased as per Table 1. When PEG was used, a 1:1 PPA:PEG blend was tested at equivalent levels. The throughput and concentration information was used to calculate the total amount of PPA flowing through the die required to eliminate melt fracture. The amount of PPA + PEG was also calculated. Melt fracture was measured using the method outlined above. The data is reported in Table 1.

As used throughout this section, "CE" indicates a comparative example and "EX" indicates an example according to the disclosure of the present application.

**Table 1**

| Example | PA | HALS | PA levels used (ppm) | PEG levels used (ppm) | Grams of PA required | Grams of PA + PEG require d |
|---|---|---|---|---|---|---|
| CE1 | PA-2 | None | 800/ 950/ 1100 | None | >20.7 (MF remaining) | NA |
| CE2 | PA-1 | None | 200/ 350/ 500/ 650 | None | 4.3 | NA |
| CE3 | PA-1 | Yes | 200/ 350/ 500/ 650 | None | 10.8 | NA |
| CE8 | PA-2 | None | 400/ 475/ 550 | 400/ 475/ 550 | 4.3 | 8.7 |
| EX2 | PA-2 | Yes | 800/ 950/ 1100 | None | 13.2 | NA |
| EX3 | PA-2 | Yes | 400/ 475/ 550 | 400/ 475/ 550 | 8.5 | 16.9 |

| | | | | | | |
|---|---|---|---|---|---|---|
| NA=not applicable | | | | | | |

The data in Table 3 show a significant improvement in performance when PEG is added to PA-2. The addition of HALS was detrimental to PA-1 whereas it was beneficial to PA-2.

The addition of HALS to the PA-2 PEG blend was slightly detrimental, but to a lesser extent than the addition of HALS to PA-1.

### Melt Fracture Elimination Test Conditions-Part II

Another set of samples was prepared and tested was prepared by testing in the T-2 host resin at 220°C (430°F), 0.6 mm (25 mil) gap, 14 L/D, 6.8 kg/h (15 lb/h), 300/s. The performance of the additive was tested with and without the presence of 2000 ppm of HALS.

The PPA was formulated with varying ratios of PEG to PA-2. The total level of the PEG-PA-2 combination was kept constant. The results are reported in Table 2.

**Table 2**

| | EX10 | EX4 | EX5 | EX6 | EX7 | CE5 |
|---|---|---|---|---|---|---|
| Wt% PEG | 0 | 10 | 25 | 50 | 75 | 100 |
| PEG | 0ppm | 150ppm | 375ppm | 750ppm | 1125ppm | 1500ppm |
| PA-2 | 1500ppm | 1350ppm | 1125ppm | 750ppm | 375ppm | 0ppm |

| Time | | | | | | |
|---|---|---|---|---|---|---|
| 0 | 100 | 100 | 100 | 100 | 100 | 100 |
| 10 | 100 | 100 | 100 | 100 | 100 | 100 |
| 20 | 100 | 100 | 100 | 100 | 100 | 100 |
| 30 | 68 | 75 | 78 | 93 | 99 | 100 |
| 40 | 11 | 15 | 19 | 36 | 71 | 99 |
| 50 | 4 | 3 | 5 | 7 | 14 | 96 |
| 60 | 2 | 0.5 | 3 | 2 | 3 | 85 |

### Thermal Reactivity with Amines

To exemplify the superior chemical stability in the presence of amines (of which HALS are a subset) of the silicone-polyamide polymeric process additives of the present description as compared to fluoroelastomers, blends of various amines with PA-1 or PA-2 were prepared.

The amines were:

| |
|---|
| Tinuvin 622, a tertiary hindered amine light stabilizer (HALS) commercially available BASF Corporation, Florham Park, NJ. |
| Chimasorb 944 an aromatic secondary hindered amine light stabilizer (HALS) commercially available BASF Corporation, Florham Park, NJ. |
| 4-cyanopyridine, an aromatic amine, available from TCI America, Portland, OR |
| 4-(dimethyl amino) benzaldehyde, a tertiary amine, available from Alfa Aesar, Ward Hill, MA |
| DABCO (1,4 diazo [2,2,2] bicyclooctane), a tertiary amine, available from Lancaster Synthesis Inc, Pelham NH |
| 2-Ethylimidazole, a tertiary amine, available from Alfa Aesar, Ward Hill, MA |

Blends of amine and PA were obtained by preparing 10% solutions of the amines in tetrahydrofuran (THF) and 40% solution of the PA in THF, blending 2 parts of one amine solution with one part of one PA solution, and allowing the samples to dry overnight, followed by drying under vacuum for 30 minutes. (33.3% amine, 66.7% PA)

### Example 8 and Comparative Example 6

The blends obtained were tested for thermal stability by placing the samples in a vented oven at 275°C for 30 minutes. The samples were taken out, cooled to room temperature and examined for discoloration. They were compared the samples of the individual components and to samples that were not oven treated. The results are reported in Table 3.

**Table 3**

| | Before Heat Aging | | | After Heat Aging | | |
|---|---|---|---|---|---|---|
| | | EX 8 | CE 6 | | EX 8 | CE 6 |
| Amines | Alone | PA-2 | PA-1 | Alone | PA-2 | PA-1 |
| No amine | N/A | White | White | N/A | White | Brown |
| Tinuvin 622 | White | White | White | Dark Brown Residue | Tan | Black |
| Chimasorb 944 | White | White | Off-White | Dark Brown Residue | Brown | Black |
| 4-cyanopyridine | White | White | White | No residue | White | Brown |
| 4-(dimethyl amino) benzaldehyde | White | White | Off-White | Yellow Residue | Light Yellow | Brown |
| DABCO | White | White | Yellow | Dark Brown Residue | White | Black |
| 2-Ethylimidazole | White | White | Tan | | White | Black |

In all cases, the PA-2 samples are less discolored than the PA-1 samples.

### Example 9 and Comparative Example 7

The same individual components and blends that were tested in Example 8 and Comparative Example 6 were also tested by thermogravimetry.

Approximately 10 mg of a blend was placed in a freshly flamed micro ceramic pan. The pan was placed in the furnace of a Pyris 1 thermo gravimetric analyzer (Perkin Elmer). The temperature was held isothermally in nitrogen at 35°C for 5 minutes, and then ramped to 275°C at 200°C/min. The atmosphere was then changed to air and the temperature was held at 275°C in for 30 minutes. The weight loss the end of the test was calculated using the Perkin Elmer Pyris Thermal Analysis Software version 10.1. The expected average weight loss was calculated using the weighted average of the individual components. The weight loss of the blends is compared to the expected weight loss in Table 4.

**Table 4**

| | | | **CE 7** | **EX 9** |
|---|---|---|---|---|
| | Amine Weight Lost Actual | Expected Weighted Average Weight Loss | PA-1 Actual Weight Loss | PA-2 Actual Weight Loss |
| No Amine | | | 0% | 3% |
| Tinuvin 622 | 5 % | 3 % | 6 % | 3 % |
| Chimasorb 944 | 5% | 3% | 6% | 3% |
| 4-cyanopyridine | 100%* | 34% | 1% | 3% |
| 4-(dimethyl amino) benzaldehyde | 100%* | 34% | 17% | 1% |
| DABCO | 100%* | 34% | 4% | 2% |
| 2-Ethylimidazole | 100%* | 34% | 31% | 2% |

| | | | | |
|---|---|---|---|---|
| * Vaporized | | | | |

## Claims

1. A composition comprising:
from 50 to 99.5 weight percent based on the total weight of the composition of a melt-processable thermoplastic hydrocarbon polymer;
a thermoplastic silicone-containing polymeric process additive selected from the group consisting of linear polydiorganosiloxane polyamide block polymers and polydiorganosiloxane urethane-containing copolymers; and
a hindered amine light stabilizer;
wherein the weight ratio of the silicone-containing polymeric process additive to hindered amine light stabilizer is from 0.5:1 to 1.5:1.

2. The composition of claim 1, wherein the hydrocarbon polymer is selected from the group consisting of: a polyethylene homopolymer, a polypropylene homopolymer, a modified polyethylene polymer, a modified polypropylene polymer, a polyethylene copolymer, a polypropylene copolymer, and a combination thereof.

3. The composition of claim 1 or 2, wherein the hydrocarbon polymer is selected from the group consisting of a high density polymer and a low density polymer.

4. The composition of any of the preceding claims, wherein the hydrocarbon polymer is a linear low density polyethylene.

5. The composition of any of the preceding claims, wherein the silicone-containing polymeric process additive is a silicone-polyurethane.

6. The composition of any of claims 1 to 4, wherein the silicone-containing process additive is a silicone-polyamide selected from the group consisting of:
a copolymer comprising at least two repeat units of Formula I: 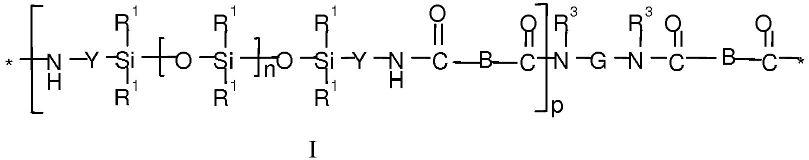
wherein each R¹ is independently selected from the group consisting of: an alkyl group, a haloalkyl group, an aralkyl group, an alkenyl group, an aryl group, an alkoxy group, and a halogen;
each Y is independently selected from the group consisting of: an alkylene group, aralkylene group, and a combination thereof;
G is a divalent group;
each B is independently selected from the group consisting of: a covalent bond, an alkylene group having from 4 to 20 carbons atoms, an aralkylene group, an arylene group, and a combination thereof; n is an integer of 0 to 1500; and p is an integer of 1 to 10; and
each R³ is independently selected from the group consisting of: an alkyl group, a haloalkyl group, an aralkyl group, an alkenyl group, an aryl group, an alkoxy group, and an alkylene group having 2 or more carbon atoms forming a heterocyclic ring that includes the R³ groups, the nitrogen atoms, and G.

7. The composition of any of the preceding claims, wherein the silicone-containing process additive is present in a weight percent of from 0.01 wt% to 0.5 % wt% based on the total weight of the composition.

8. The composition of any of the preceding claims, wherein the hindered amine light stabilizer is present in a weight percent of from 0.01 wt% to 3 wt% based on the total weight of the composition.

9. The composition of claim 8, wherein the hindered amine light stabilizer is present in a weight percent of from 0.01 wt% to 1 wt% based on the total weight of the composition.

10. The composition of any of the preceding claims, wherein the hydrocarbon polymer is present in a weight percent of from 99.9 wt% to 95 wt% based on the total weight of the composition.

11. The composition of any of the preceding claims, further comprising a synergist selected from the group consisting of i) a silicone-polyether copolymer; ii) an aliphatic polyester; iii) an aromatic polyester; iv) a polyether polyol; v) an amine oxide; vi) a carboxylic acid; vii) a fatty acid ester; and vii) a poly(oxyalkylene) polymer.

12. The composition of claim 11, wherein the synergist is polyethyleneglycol.

13. The composition of claim 12, wherein the synergist is present in an amount of from 10 wt% to 75 wt% based on the total weight of the synergist and the process additive.

14. The composition of any of the preceding claims, wherein the weight ratio of the silicone-containing polymeric process additive to hindered amine light stabilizer is from 0.15:1 to 2:1.

15. The composition of any of the preceding claims, wherein the weight ratio of the silicone-containing polymeric process additive to hindered amine light stabilizer is from 0.2:1 to 1.5:1.

## Patentansprüche

1. Zusammensetzung, die Folgendes umfasst:
von 50 bis 99,5 Gewichtsprozent, basierend auf dem Gesamtgewicht der Zusammensetzung, ein schmelzverarbeitbares, thermoplastisches Kohlenwasserstoffpolymer;
einen thermoplastischen silikonhaltigen polymeren Prozesszusatz, ausgewählt aus der Gruppe bestehend aus linearen Polydiorganosiloxan-Polyamidblockpolymeren und Polydiorganosiloxan-Urethan-haltigen Copolymeren; und
einen gehinderten Amin-Lichtstabilisator;
wobei das Gewichtsverhältnis des silikonhaltigen polymeren Prozesszusatzes zu gehindertem Amin-Lichtstabilisator im Bereich von 0,5 : 1 bis 1,5 : 1 liegt.

2. Zusammensetzung nach Anspruch 1, wobei das Kohlenwasserstoffpolymer ausgewählt ist aus der Gruppe bestehend aus: einem Polyethylenhomopolymer, einem Polypropylenhomopolymer, einem modifizierten Polyethylenpolymer, einem modifizierten Polypropylenpolymer, einem Polyethylencopolymer, einem Polypropylencopolymer und einer Kombination davon.

3. Zusammensetzung nach Anspruch 1 oder 2, wobei das Kohlenwasserstoffpolymer ausgewählt ist aus der Gruppe bestehend aus einem Polymer hoher Dichte und einem Polymer niedriger Dichte.

4. Zusammensetzung nach einem der vorstehenden Ansprüche, wobei das Kohlenwasserstoffpolymer ein lineares Polyethylen niedriger Dichte ist.

5. Zusammensetzung nach einem der vorstehenden Ansprüche, wobei der silikonhaltige, polymere Prozesszusatz ein Silikon-Polyurethan ist.

6. Zusammensetzung nach einem der Ansprüche 1 bis 4, wobei der silikonhaltige Prozesszusatz ein Silikon-Polyamid ist, das ausgewählt ist aus der Gruppe bestehend aus:
einem Copolymer, das mindestens zwei Wiederholungseinheiten der Formel I umfasst: 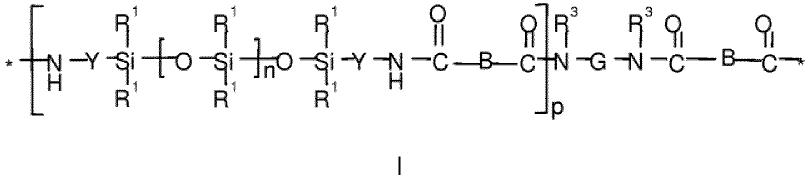
worin jedes R¹ unabhängig ausgewählt ist aus der Gruppe bestehend aus: einer Alkylgruppe, einer Haloalkylgruppe, einer Aralkylgruppe, einer Alkenylgruppe, einer Arylgruppe, einer Alkoxygruppe und einem Halogen;
jedes Y unabhängig ausgewählt ist aus der Gruppe bestehend aus: einer Alkylengruppe, Aralkylengruppe und einer Kombination davon;
G eine zweiwertige Gruppe ist;
jedes B unabhängig ausgewählt ist aus der Gruppe bestehend aus: einer kovalenten Bindung, einer Alkylengruppe mit 4 bis 20 Kohlenstoffatomen, einer Aralkylengruppe, einer Arylengruppe und einer Kombination davon; n eine ganze Zahl von 0 bis 1500 ist; und p eine ganze Zahl von 1 bis 10 ist; und
jedes R³ unabhängig ausgewählt ist aus der Gruppe bestehend aus: einer Alkylgruppe, einer Haloalkylgruppe, einer Aralkylgruppe, einer Alkenylgruppe, einer Arylgruppe, einer Alkoxygruppe und einer Alkylengruppe mit 2 oder mehr Kohlenstoffatomen unter Bildung eines heterocyclischen Rings, der die R³-Gruppen, die Stickstoffatome und G enthält.

7. Zusammensetzung nach einem der vorstehenden Ansprüche, wobei der silikonhaltige Prozesszusatz in einem Gewichtsprozent von 0,01 Gew.-% bis 0,5 Gew.-%, basierend auf dem Gesamtgewicht der Zusammensetzung, vorhanden ist.

8. Zusammensetzung nach einem der vorstehenden Ansprüche, wobei der gehinderte Amin-Lichtstabilisator in einem Gewichtsprozent von 0,01 Gew.-% bis 3 Gew.-%, basierend auf dem Gesamtgewicht der Zusammensetzung, vorhanden ist.

9. Zusammensetzung nach Anspruch 8, wobei der gehinderte Amin-Lichtstabilisator in einem Gewichtsprozent von 0,01 Gew.-% bis 1 Gew.-%, basierend auf dem Gesamtgewicht der Zusammensetzung, vorhanden ist.

10. Zusammensetzung nach einem der vorstehenden Ansprüche, wobei das Kohlenwasserstoffpolymer in einem Gewichtsprozent von 99,9 Gew.-% bis 95 Gew.-%, basierend auf dem Gesamtgewicht der Zusammensetzung, vorhanden ist.

11. Zusammensetzung nach einem der vorstehenden Ansprüche, ferner umfassend einen Synergisten, der ausgewählt ist aus der Gruppe bestehend aus i) einem Silikon-Polyether-Copolymer; ii) einem aliphatischen Polyester; iii) einem aromatischen Polyester; iv) einem Polyetherpolyol; v) einem Aminoxid; vi) einer Carbonsäure; vii) einem Fettsäureester; und vii) einem Poly(oxyalkylen)polymer.

12. Zusammensetzung nach Anspruch 11, wobei es sich bei dem Synergisten um ein Polyethylenglykol handelt.

13. Zusammensetzung nach Anspruch 12, wobei der Synergist in einer Menge von 10 Gew.-% bis 75 Gew.-%, bezogen auf die Gesamtmenge an Synergist und Prozesszusatz, vorhanden ist.

14. Zusammensetzung nach einem der vorstehenden Ansprüche, wobei das Gewichtsverhältnis des silikonhaltigen polymeren Prozessadditivs zu gehindertem Amin-Lichtstabilisator im Bereich von 0,15:1 bis 2:1 liegt.

15. Zusammensetzung nach einem der vorstehenden Ansprüche, wobei das Gewichtsverhältnis des silikonhaltigen polymeren Prozessadditivs zu gehindertem Amin-Lichtstabilisator im Bereich von 0,2:1 bis 1,5:1 liegt.

## Revendications

1. Composition comprenant :
de 50 à 99,5 pour cent en poids sur la base du poids total de la composition d'un polymère d'hydrocarbure thermoplastique pouvant être traité en fusion ;
un additif de traitement polymère thermoplastique contenant de la silicone choisi dans le groupe constitué de polymères séquencés linéaires polydiorganosiloxane polyamide et copolymères contenant du polydiorganosiloxane uréthane ; et
un agent stabilisant à la lumière de type amine encombrée ;
dans laquelle le rapport pondéral de l'additif de traitement polymère contenant de la silicone à l'agent stabilisant à la lumière de type amine encombrée va de 0,5:1 à 1,5:1.

2. Composition selon la revendication 1, dans laquelle le polymère d'hydrocarbure est choisi dans le groupe constitué de : un homopolymère de polyéthylène, un homopolymère de polypropylène, un polymère de polyéthylène modifié, un polymère de polypropylène modifié, un copolymère de polyéthylène, un copolymère de polypropylène, et une combinaison de ceux-ci.

3. Composition selon la revendication 1 ou 2, dans laquelle le polymère d'hydrocarbure est choisi dans le groupe constitué d'un polymère haute densité et d'un polymère basse densité.

4. Composition selon l'une quelconque des revendications précédentes, dans laquelle le polymère d'hydrocarbure est un polyéthylène linéaire à basse densité.

5. Composition selon l'une quelconque des revendications précédentes, dans laquelle l'additif de traitement polymère contenant de la silicone est un silicone-polyuréthane.

6. Composition selon l'une quelconque des revendications 1 à 4, dans laquelle l'additif de traitement contenant de la silicone est un silicone-polyamide choisi dans le groupe constitué de :
un copolymère comprenant au moins deux motifs de répétition de Formule I : 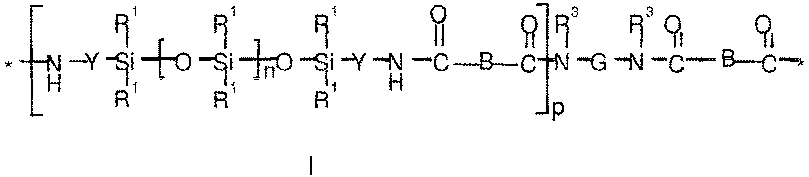
dans laquelle chaque R¹ est indépendamment choisi parmi le groupe constitué de : un groupe alkyle, un groupe haloalkyle, un groupe aralkyle, un groupe alcényle, un groupe aryle, un groupe alcoxy et un halogène ;
chaque Y est indépendamment choisi parmi le groupe constitué de : un groupe alkylène, un groupe aralkylène, et une combinaison de ceux-ci ;
G est un groupe divalent ;
chaque B est indépendamment choisi dans le groupe constitué de : une liaison covalente, un groupe alkylène ayant de 4 à 20 atomes de carbone, un groupe aralkylène, un groupe arylène, et une combinaison de ceux-ci ; n est un nombre entier de 0 à 1500 ; et p est un nombre entier de 1 à 10 ; et
chaque R³ est indépendamment choisi parmi le groupe constitué de : un groupe alkyle, un groupe haloalkyle, un groupe aralkyle, un groupe alcényle, un groupe aryle, un groupe alcoxy et un groupe alkylène ayant 2 atomes de carbone ou plus formant un noyau hétérocyclique qui inclut les groupes R³, les atomes d'azote, et G.

7. Composition selon l'une quelconque des revendications précédentes, dans laquelle l'additif de traitement contenant de la silicone est présent en un pourcentage en poids allant de 0,01 % en poids à 0,5 % en poids sur la base du poids total de la composition.

8. Composition selon l'une quelconque des revendications précédentes, dans laquelle l'agent stabilisant à la lumière de type amine encombrée est présent en un pourcentage en poids allant de 0,01 % en poids à 3 % en poids sur la base du poids total de la composition.

9. Composition selon la revendication 8, dans laquelle l'agent stabilisant à la lumière de type amine encombrée est présent en un pourcentage en poids allant de 0,01 % en poids à 1 % en poids sur la base du poids total de la composition.

10. Composition selon l'une quelconque des revendications précédentes, dans laquelle le polymère d'hydrocarbure est présent en un pourcentage en poids allant de 99,9 % en poids à 95 % en poids sur la base du poids total de la composition.

11. Composition selon l'une quelconque des revendications précédentes, comprenant en outre un synergiste choisi dans le groupe constitué de i) un copolymère silicone-polyéther ; ii) un polyester aliphatique ; iii) un polyester aromatique ; iv) un polyéther polyol ; v) un oxyde d'amine ; vi) un acide carboxylique ; vii) un ester d'acide gras ; et vii) un polymère poly(oxyalkylène).

12. Composition selon la revendication 11, dans laquelle le synergiste est du polyéthylène glycol.

13. Composition selon la revendication 12, dans laquelle le synergiste est présent en une quantité allant de 10 % en poids à 75 % en poids sur la base du poids total du synergiste et de l'additif de traitement.

14. Composition selon l'une quelconque des revendications précédentes, dans laquelle le rapport pondéral de l'additif de traitement polymère contenant de la silicone à l'agent stabilisant à la lumière de type amine encombrée va de 0,15:1 à 2:1.

15. Composition selon l'une quelconque des revendications précédentes, dans laquelle le rapport pondéral de l'additif de traitement polymère contenant de la silicone à l'agent stabilisant à la lumière de type amine encombrée va de 0,2:1 à 1,5:1.
